# EUROPEAN PATENT APPLICATION

(11) **EP 1 160 994 A2**
(43) Date of publication of application: **05.12.2001**
(21) Application number: 01112801.4
(22) Date of filing: 29.05.2001
(51) Int. Cl.: H04B 1/707

(54) **Spread spectrum receiver device**

(30) Priority: 31.05.2000 JP 2000163420
(71) Applicant: NEC CORPORATION, Tokyo (JP)
(72) Inventor: Tomita, Takayuki, NEC IC Microcomputer Syst. Ltd., Kawasaki-shi, Kanagawa (JP); Maruyama, Yuichi, NEC IC Microcomputer Syst. Ltd., Kawasaki-shi, Kanagawa (JP)
(74) Representative: VOSSIUS & PARTNER

(57) **Abstract**

A spectrum spread receiver is provided which correlatively executes in synchronism with a timing determined by each of multiple paths and conducts RAKE synthesis of correlating signal of each path, and which comprises: a plurality of finger processing circuits(100 (101,102)); a memory circuit (81), which stores inverse spread data of a unit length; a timing adjustment circuit (71), which outputs a timing signal at the time when a predetermined amount of inverse spread data are stored in a memory circuit; and a RAKE synthesizer (10) for conducting RAKE synthesis by reading a predetermined length of inverse spread data from the memory circuit (81) based on the timing signal output from the timing adjustment circuit (71).

## Description

The present invention relates to a spectrum spread receiver device in an information communication system based on a Code Division Multiple Access (hereinafter, referred to as CDMA) scheme.

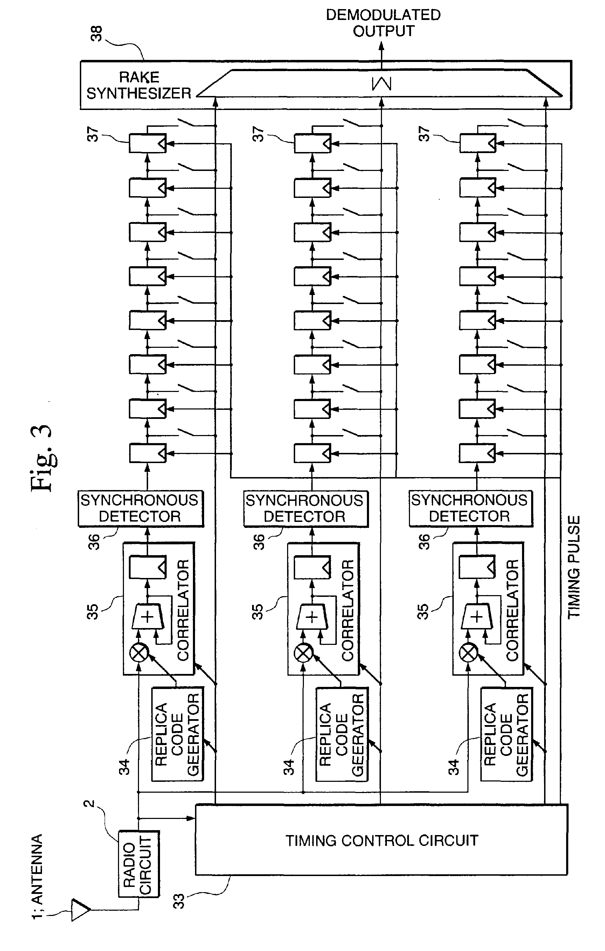

In a spectrum spread receiver device in an information communication system based on a CDMA scheme, a structural example of a spectrum spread receiver device is as shown in Fig. 3. This spectrum spread receiver device shown in Fig. 3 receives signals from multiple paths, performs a correlation operation in a synchronized form by adjusting the timing of signals from each path, and obtains a desired signal by performing a RAKE synthesis (hereinafter, called RAKE).

In Fig. 3, a finger processing portion, which is composed of a replica code generator 34, a correlator 35, and an asynchronous detector 36, detects signals at a timing allocated by a timing control circuit 33. Demodulated data is output from a RAKE synthesizer 38 by inputting the detected data, whose timings are adjusted by a timing adjustment buffer 37, into the RAKE synthesizer 38. Japanese Unexamined Patent Application, First Publication No. Hei 10-190528 discloses this technique in detail.

Conventionally, no particular problem has been encountered because the above-described RAKE synthesis is conducted in symbol units. However, a process is added which extends over a plurality of symbols to be processed in units of symbols, according to a rule by 3GPP (3rd Generation Partnership Project), which is a standardization group for establishing technical specifications of third generation mobile systems based on a further advanced GSM (Global System for Mobile Communication) core network and radio access technology. Thus, an architecture is required which is suitable for processing a plurality of symbols collectively.

Furthermore, since processing becomes complicated with an increase in the number of fingers and any increase of the RAKE functions, such as multi-code, the software processing becomes more functional and more expandable than hardware processing for symbol units.

The conventional technique is incapable of executing RAKE processing which extends over a plurality of symbols and requires processing in code units, so that it is difficult for the conventional technique to execute processing using software. Thus, a problem arises for the conventional technique in that the cost increases remarkably when the permissible amount of the timing delay or the number of fingers increases.

The present invention is made to solve the above-described problems, and the object of the present invention is to provide a spectrum spread receiver device, that is capable of RAKE synthesis collectively over a plurality of inverse spread data generated in the finger processing portion based on the received data, by executing the RAKE synthesis after the inverse spread data have been written in a memory circuit, and which is made suitable for designing circuits based on a software description language.

The first aspect of the present invention provides a spectrum spread receiver, in which, when conducting RAKE synthesis on inverse spread data generated based on the received data, RAKE synthesis is executed by performing a predetermined timing adjustment after the inverse spread data having a plurality of symbols have been stored in a memory circuit.

The second embodiment provides a spectrum spread receiver, in which received data from multiple paths are correlatively processed to be in synchronism with the timing corresponding to each path, and a correlative output signal of each path is synthesized by RAKE synthesis, comprising: a plurality of finger processing circuits for generating inverse spread data in accordance with said timings, a memory circuit for storing said inverse spread data of a unit length; a timing adjustment circuit for outputting a timing signal when a predetermined amount of inverse spread data is stored in said memory circuit; and a RAKE synthesizer for performing RAKE synthesis by reading a unit length of inverse spread data from said memory circuit based on the timing signal output from said timing adjustment circuit.

In the above spectrum spread receiver, said timing adjustment circuit outputs a timing signal for performing RAKE synthesis when a predetermined amount of inverse spread data is stored in said memory circuit.

In the above spectrum spread receiver, each finger processing circuit generates and outputs inverse spread data and an inverse diffusion data output flag whenever a predetermined length of inverse spread data has been completed, and said timing adjustment circuit writes the inverse spread data in said memory device at a timing when said inverse spread data output flag has been input, by referring to the inverse spread data output flag generated and output from each finger processing circuit, when each finger processing circuit has a different processing timing.

In the above spectrum spread receiver, an address, generated at the time when said inverse spread data is written, is determined by a finger number, a symbol number processed by said finger processing circuit, and a variable value which is alternately set to "0" or "1" when a predetermined amount of inverse spread data is stored in said memory circuit.

### BRIEF DESCRIPTION OF THE DRAWINGS

Fig. 1 is a diagram showing the spectrum spread receiver device according to one embodiment of the present invention.
Fig. 2 is a flowchart showing the operation of the embodiment of the present invention.
Fig. 3 is a block diagram showing the structure of a conventional spectrum spread receiver device.

### DETAILED DESCRIPTION OF THE INVENTION

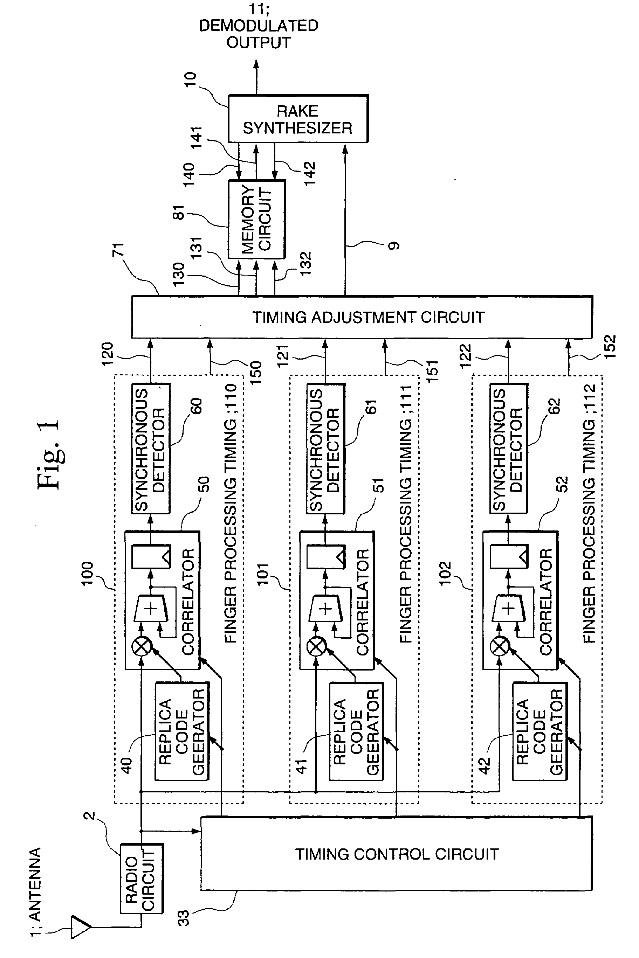

Fig. 1 is a diagram showing the spectrum spread receiver device according to one embodiment of the present invention. The spectrum spread receiver device of the present invention comprises: an antenna 1; a radio circuit 2; a timing control circuit 3; finger processing circuits 100, 101, and 102; a timing adjustment circuit 71; a memory circuit 81; and a RAKE synthesizer 10.

The finger processing circuit 100 comprises a replica code generator 40, a correlator 50, and a synchronous detector 60. The finger processing circuit 101 comprises a replica code generator 41, a correlator 51, and a synchronous detector 61; the finger processing circuit 102 comprises a replica code generator 42, a correlator 52, and a synchronous detector 62.

In the above constitution, first, the radio circuit 2 transforms a modulated wave received by the antenna 1. The timing control circuit 3 detects multiple path phases (finger processing timings 110, 111, and 112). The finger processing circuit 100 executes inverse spreading in accordance with the finger processing timing 110, and outputs the inverse spread data 120 and an inverse spread data output flag 150. Similarly, the finger processing circuit 101 executes inverse spreading in accordance with the finger processing timing 111, and outputs inverse spread data 121 and an inverse spread data output flag 151. The finger processing circuit 102 executes inverse spreading in accordance with the finger processing timing 112, and outputs inverse spread data 122 and an inverse spread data output flag 152.

The timing adjustment circuit 71 detects, based on the inverse spread data output flags, that the finger processing by each finger processing circuit has been completed, and the timing of each inverse spread data (120, 121, and 122) is adjusted. When only one inverse spread data output flag is input, that is, when the timing for each finger processing circuit is different from the others, the timing adjustment circuit 71 writes the inverse spread data into the memory circuit 81 at the time when each of the inverse spread data output flags 150, 151, and 152 is input.

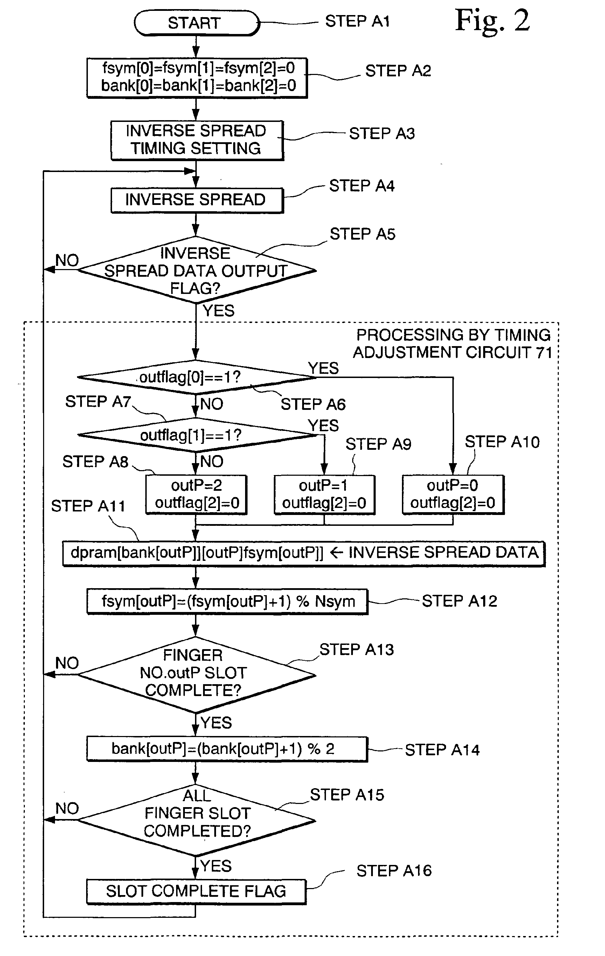

At this time, the inverse spread data is written into the memory circuit 81 as written data 131 based on a finger number, a code number, a writing address 130 which is generated by the variable bank shown in the flowchart in Fig. 2, and a writing signal 132.

When a plurality of the inverse spread output data flags 150, 151, and 152 are input into the timing adjustment circuit 71, that is, when the timings for processing the outputs of respective finger processing circuits overlap, the writing operation into the memory circuit 81 is executed in accordance with a predetermined order of priority.

For example, when three inverse spread data output flags 150, 151, and 152 are input simultaneously, that is, when the timings of three fingers overlap, the inverse spread data 120 is written into the memory circuit 81.

Next, after waiting for one cycle, the inverse spread data 121 is written into the memory circuit 81. Similarly, after waiting for another cycle, the inverse spread data 122 is written into the memory circuit 81. Since the symbol rate is larger than the spread rate, in general, it is possible to wait for the timing, and the inverse spread data can be reasonably written in order.

The memory circuit 81 is capable of storing a certain length of the inverse spread data, the length being twice as long as a unit length (corresponding to a slot unit length, for example). The timing adjustment circuit 71 generates a timing signal, after storing a certain unit length (a slot unit) of the inverse spread data for informing the RAKE synthesizer 10. The RAKE synthesizer 10 reads the inverse spread data based on a read signal 142 generated by a timing signal 9 for reading data stored in a certain read address 140, and the RAKE synthesizer 10 executes RAKE synthesis on the inverse spread data which is read from the memory circuit 81. Simultaneously with this RAKE synthesis operation, the other inverse spread data are written into the other addresses in sequence.

Note that, since the replica code generators 40, 41, and 42, the correlators 50, 51, and 52, and the synchronous detectors 60, 61, and 62 are conventionally known, and these elements are not directly related to the present invention, their explanations are omitted.

Fig. 2 is a flowchart showing the circuit operation of the spectrum spread receiver device shown in Fig. 1. In Fig. 2, the region enclosed by the dotted lines shows the operation of the timing adjustment circuit 71. Furthermore, in the flow chart, the variable "Nsym" represents the number of symbols, "fsym[a]" represents the symbol number of fingers, "outflag[a]" represents an inverse spread data output flag of the finger processing circuit 100 (101 and 102), "outP" represents the finger number to be written in the memory circuit 81, "dpram" represents a memory device 81, "bank" represents the most significant bit of the dpram, and "%" represents an excess operator. The following explanation is made on the premise that there are three fingers.

Below, the operation of the present embodiment shown in Fig. 1 is described in detail with reference to the flowchart shown in Fig. 2.

First, the variables "fsym" and "bank" are set to "0" for initialization thereof and the inverse spreading timing is established (steps A1, A2, and A3). The modulated wave received by the antenna 1 is converted into a base-band signal by the radio circuit 2, and the phases (finger processing timings 110, 111, and 112) of the multiple paths are detected from the base-band signal by the timing control circuit 3.

The finger processing circuit 100 executes the inverse spreading in accordance with the finger processing timing 110 (steps A3 and A4), and the inverse spread data 120 is output. Similarly, the finger processing circuit 101 executes inverse spreading in accordance with the finger processing timing 111, and the inverse spread data 121 is output. The finger processing circuit 102 executes inverse spreading in accordance with the finger processing timing 112, and the inverse spread data 122 is output.

When inverse spreading for one symbol is finished, each finger processing circuit 100, 101, 102 respectively outputs the inverse spread data output flags 150, 151, 152. In the subsequent step A5, it is determined whether the inverse spread data output flags 150, 151, and 152 have been output, and if the determination is "NO", then the flow returns to the step A4 and continues the inverse spreading operation.

In step A5, there are two cases, one is the case that only one inverse spread data output flag is output, and the other case is that two or more inverse spread data output flags are output. Below, the case is described wherein the inverse spread data output flags are simultaneously output from two finger processing circuits 101 and 102.

When an inverse spread data output flag is detected in step A5, the flow proceeds to step A6, wherein it is determined whether there is an inverse spread data output flag 150 from finger processing circuit 100. In this case, since the inverse spread data output flag 150 is not output, the flow proceeds to step A7.

In step A7, it is detected whether there is an inverse spread data output flag 151 from the finger processing circuit 101. When the inverse spread data output flag 151 is output from the finger processing circuit 101, the flow proceeds to step A9. In step A9, the inverse spread data output flag 151 from the finger processing circuit 101 is set to "0", the variable "outP", which is one of elements of the writing addresses to be written into the memory circuit 81, is set to "1", and the flow proceeds to step A11. In step A11, the inverse spread data from the finger processing circuit are written in the addresses of the memory circuit 81 corresponding to bank[outP], outP, and fsym[outP].

In step A12, the symbol number fsym[outP] of the finger processing circuit 101 is incremented. In step A13, it is determined whether a slot of the finger processing circuit 101 is completed. If the slot of the finger processing circuit 101 has been completed, the flow returns to step A4, and inverse spreading is executed. Subsequently, in step A5, it is determined whether or not the inverse spread data output flags 150, 151, and 152 have been output.

Here, the inverse spread data output flags 152 have been output, and the flow proceeds to step A6. In step A6, since the inverse spread data output flag 150 from the finger processing circuit 100 has not been output, the flow proceeds to step A7.

In step A7, since the inverse spread data output flag 151 has not been detected, that is, since the inverse spread data output flag 152 of the finger processing circuit 102 has been detected, the flow proceeds to step A8.

In step A8, the inverse spread data output flag 152 from the finger processing circuit 102 is set to "0", the variable "outP", which is one of elements in writing addresses to be written into the memory circuit 81, is set to a finger number "2", and the flow proceeds to step A11. Then, the processing in step A12 and the steps thereafter are executed, and the operations from the step A4 to A13 are repeated until every slot is completed.

When the slot of the finger number outP has been completed, the flow proceeds from A13 to step A14, and bank[outP] is incremented by 1. At this time, the bank[outP] is "0" or "1".

In step A15, it is determined whether the slots for all of fingers have been completed. If all of the slots have not been completed, the flow returns to step A14. When the slots of all of the fingers have been completed, the flow proceeds to step A16, wherein the timing signal 9 is set to "1" (slot is completed), and the flow returns to step A4.

After receiving the timing signal 9, the RAKE synthesizer 10 reads the inverse spread data from the memory circuit 81 to perform RAKE synthesis. After returning the timing signal 9 to "0", the series of operations from step A4 to step A16 are repeated. If the inverse spread timing is newly set, the operation returns to step A1.

As described above, at the time of executing RAKE synthesis of the inverse spread data generated in the finger processing circuits 100, 101, 102 based on the received data, the present invention makes it possible to synthesize extending over a plurality of symbols by executing RAKE synthesis after writing the inverse spread data in one memory circuit 81, and the present invention is suitable for executing post RAKE synthesis operations in a specified unit collectively and executing a circuit design based on the soft ware description language. In addition, since the present invention provides one memory circuit, it is possible to minimize the size of the circuit by unification of the address decoders.

In the above description, it is assumed that the numbers of fingers are three, and the data storing unit is a slot. However, it is possible to optionally constitute the RAKE synthesizer by changing the number of fingers to N, and the storing unit to be M symbols. The present invention is not limited to the embodiment described above, and variants thereof can be envisaged which do not exceed beyond the scope of the invention.

## Claims

1. A spectrum spread receiver, in which, when conducting RAKE synthesis of inverse spread data generated based on received data, RAKE synthesis is executed by performing a predetermined timing adjustment after the inverse spread data having a plurality of symbols are first stored in a memory circuit.

2. A spectrum spread receiver, in which received data from multiple paths are correlatively processed to be in synchronism with a timing corresponding to each of said paths, and a correlative output signal of each of said paths is synthesized by RAKE synthesis, comprising:
a plurality of finger processing circuits for generating inverse spread data in accordance with said timings;
a memory circuit for storing said inverse spread data of a unit length;
a timing adjustment circuit for outputting a timing signal when a predetermined amount of inverse spread data is stored in said memory circuit; and
a RAKE synthesizer for performing the RAKE synthesis by reading a unit length of inverse spread data from said memory circuit based on the timing signal output from said timing adjustment circuit.

3. A spectrum spread receiver according to claim 2, wherein said timing adjustment circuit outputs a timing signal for performing the RAKE synthesis when a predetermined amount of inverse spread data is stored in said memory circuit.

4. A spectrum spread receiver according to claim 2, wherein
each of said finger processing circuits generates and outputs inverse spread data and an inverse spread data output flag whenever a predetermined length of inverse spread data is completed; and
said timing adjustment circuit writes said inverse spread data in said memory circuit at a timing when said inverse spread data output flag is input, by referring to said inverse spread data output flag generated and output from each of said finger processing circuits, when each of said finger processing circuits has a different processing timing.

5. A spectrum spread receiver according to claim 4, wherein an address, generated at the time when said inverse spread data is written, is determined by a finger number, a symbol number processed by said finger processing circuit, and a variable value which is alternately set to "0" or "1" when a predetermined amount of inverse spread data is stored in said memory circuit.

6. A method of performing spectrum spread data comprising any or several features of any of claims 1 to 5.
